# EUROPEAN PATENT APPLICATION

(11) **EP 1 626 563 A1**
(43) Date of publication of application: **15.02.2006**
(21) Application number: 04077263.4
(22) Date of filing: 10.08.2004
(51) Int. Cl.: H04M 11/06

(54) **DSL access multiplexer**

(71) Applicant: Nederlandse Organisatie voor Toegepast-Natuurwetenschappelijk Onderzoek TNO, 2628 VK Delft (NL)
(72) Inventor: Van Leerdam, Huibert Steven, 3813 CL Amersfoort (NL)
(74) Representative: Winckels, Johannes Hubertus F.

(57) **Abstract**

System for simultaneous exchange of analog voice band signals and digital data signals between user termination equipment and local exchange equipment via common connection wires, comprising means for exchanging the data signals between the user termination equipment and the local exchange equipment in the format of a modulated carrier signal having a frequency spectrum above the voice band. The system comprises converting means (SBDSLM) for converting the digital data signals into data signals having a specific bandwidth and/or format, being fit to cause no substantial mutual interference between the voice band signals and the converted data signals, and means (MDF, Scab) to merge the converted data signals and the voice band signals to said common connection wires. The system may comprise means (BBDSLM) for converting the digital data signals into data signals having a standard bandwidth and/or format which could cause substantial mutual interference between the voice band signals and the converted data signals after merging to common connection wires. Additional means (BBDSLM) convert back said converted data signals to a replica of said digital data signals, and further additional means (SSDSLM) convert those replicated digital data signals into data signals having said specific bandwidth and/or format causing no substantial mutual interference between the voice band signals and the converted replicated data signals. The specific bandwidth may be a fraction of said standard bandwidth, while specific format may result from constant envelope modulation of the relevant digital data signals or from shift key coding the relevant digital data signals, using a restricted set of shift keys.

## Description

### FIELD OF THE INVENTION

The invention refers to a "Digital Subscriber Line" (DSL) or "Asymmetric Digital Subscriber Line" (ADSL) system, fit to transport digital data together with analogue telephony signals by a conventional wire pair between a subscriber and a local exchange.

### BACKGROUND OF THE INVENTION

For e.g. "always on" access to the Internet these days, (A)DSL connections are getting more and more popular. For combining and/or separation of the ADSL (data) and (voice band) telephony signals, frequency splitters may be used at both ends of the local loop. The current ADSL system is suitable for a maximum downstream bit-rate of 8 Mbit/s. To achieve that bit rate the system uses a high bandwidth on the local loop and high transmit levels. The high transmit levels and the used modulation method (Discrete Multi Tone, DMT), having very large amplitude peaks in the signal, require very good splitters (filters) to block these signals sufficiently in order to prevent that they disturb the telephony service and vice versa. Besides their costs, the splitters have to be installed, both at the user's and at the local exchange's side, and require additional cabling and/or wiring at the local exchange's "Main Distribution Frame" (MDF) and at the user's premises.

Present DSL systems comprise one or more "DSL Access Multiplexors" (DSLAMs) at the side of the local exchange or central office, fit to (de-)multiplex, intermix and/or separate voice and data traffic. Each DSLAM port, servicing one ADSL user, comprises one ADSL modem, fit for e.g. 8 Mbit/s downstream bit-rate, even if the relevant user only needs a relative smallband (< 8 Mbit/s) "always on" connection.

Due to the use of splitters, two extra connections at the local exchange's MDF will be used, viz. one connection for the DSL part and one for the voice part, which will require substantial space at the MDF. Moreover, the 8 Mbits capability results in a rather high energy consumption and a large physical size of the used ADSL modems.

### SUMMARY OF THE INVENTION

The invention aims to solve the problems as discussed in the previous chapter, especially to provide a DSL system which is more efficient in servicing "smallband DSL" (smallband meant as lower bitrate SDL) users.

One aspect is to convert, e.g. by means of a "DSLAM port multiplicator", the (broadband) bitstream from and/or to each (single) DSLAM port into a number (N) of smallband bitstreams and to exchange those bitstreams to and/or from N different smallband users by means of smallband DSL modems at the side of the central office and at the side of the relevant (smallband) users.

The smallband DSL modems to be used are know as such from e.g. WO99/29097. The digital subscriber line modem converts digital data signals into a format of constant envelope modulated data signals. The constant envelope modulation lessens unwanted intermodulation distortion due to non-linearities of the POTS telephone equipment. An improved splitterless DSL system is disclosed in EP04076738 in which the data signals are sent in the format of a carrier signal modulated by shift keying codes. At least when the user termination equipment or the local exchange are in a state to exchange said analog voice band signals, the data signals are sent in the format of shift keying codes having a restricted shift. The shift keying codes are limited to codes which result in a restricted offset of the modulated carrier signal, e.g. limited to shift keying codes having a restricted "Running Digital Sum" (RDS).

The smallband DSL modems to be used are compact and require low power consumption and have low heat excitation due to their low bitrate. Moreover the smallband DSL modems do not require splitters at the side of the central station and/or at the user's side. The absence of splitters saves space and wiring at the MDF. The smallband DSL modems etc. may be fit for installation at the MDF itself, saving wiring and/or wiring modifications and saving DSLAM space elsewhere in the local exchange building.

The DSLAM port multiplicator may multiply one single user ADSL DSLAM-port to a large number (e.g. 20-100) of smallband DSL ports, each equipped with a small and lean modem designed for splitterless operation. The "DSLAM port multiplicator" is small enough to be installed -e.g. by means of the standard MDF connection contact (e.g. Krone's LSA Plus ® contact system, see e.g. http://www.krone-asiapac.com/tech/lsa-plus/lsa-plus.asp) at the MDF, saving cabling, space, MDF wiring, cost of labour etc.

As the "DSLAM port multiplicator" is physically small and has low energy consumption, optionally, it could be installed in an existing cable cabinet outside the local exchange and be "fed" by an ordinary ADSL link from the local exchange. No installation of e.g. fiber to the cabinet is needed. Users outside the ADSL range could be served with an always on connection. Because of the length of the cable sections, higher bitrates could be possible (e.g. down: 80 - 160 kbit/s and up: 40 - 80 kbit/s), dependant of the location of the cabinet. In principle, it will be able to expand the ADSL area with some kilometres, using conventional (e.g. existing) twisted wire pairs.

FIGURES and EXEMPLARY EMBODIMENTS
Figure 1 shows a prior-art ADSL system.
Figure 2 shows an embodiment comprising a DSLAM port multiplicator within the central office.
Figure 3 shows an embodiment comprising a DSLAM port multiplicator within a cabinet outside the central office.

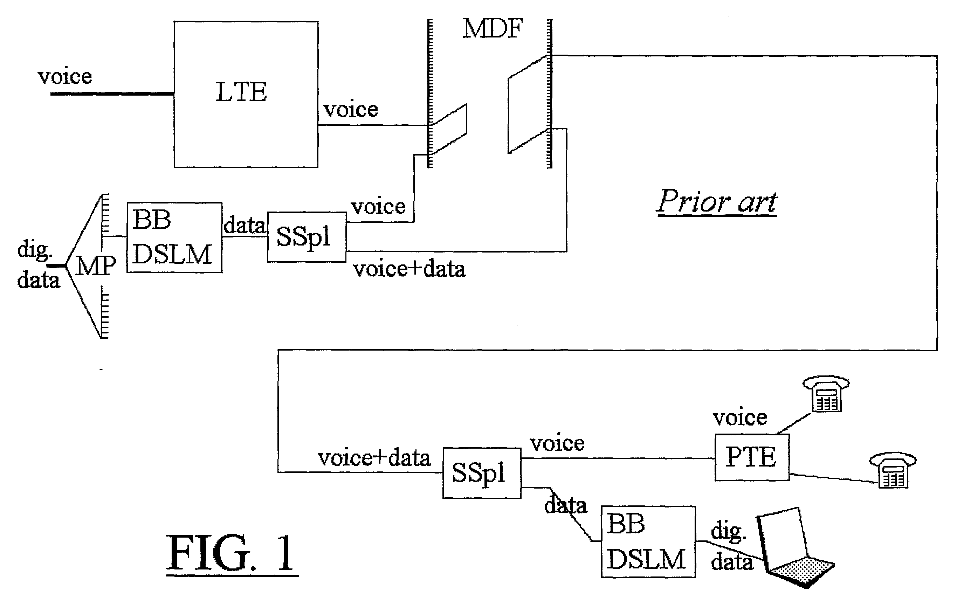

The prior system shown in figure 1 comprises a central office, including local telephony exchange circuitry LTE and a main distribution frame MDF. Voice connections can be established from the LTE, via the MDF, to and/or from user telephone terminals, if desired via the user's private telephone exchange PTE. Data can be exchanged between the central office and users by means of one or more DSLAMs, comprising a multiplexer MP, connecting e.g. a 155 Mb/s data connection with a number of broadband DSL modems BBDSLM, each fit for a bitstream of e.g. 8 Mb/s.

Each DSLAM port, formed by such a BBDSLM, and servicing one user, is connected to the relevant user, via a signal splitter SSp1, fit to combine a voice signal and a data signal into a "voice + data" signal, as well as to split a "voice + data" signal into a voice signal and a data signal. The splitter's data port is connected with the analog data port of the BBDSLM, the splitter's voice port is connected with the relevant terminal at the LTE side of the MDF, and the splitter's "voice + data" port is connected with the terminal of the MDF connected to the relevant user's copper pair.

At the side of the user, the "voice + data" port is connected to user's copper pair, while the voice port is connected to the user's telephone sets, if desired via the user's home exchange PTE. The data port of the splitter is connected to the user's broadband DSL modem BBDSLM, which is connected to the user's computer or digital network.

Voice signals may be exchanged from the LTE to the user's telephone equipment PTE via the LTE side of the MDF, the voice port of the SSpl, the "voice + data" port of the SSpl, the users' side of the MDF, the relevant twisted wire pair to the user's premises, the "voice + data" port of the user's SSpl, the voice port of the same SSpl and the user's telephone system PTE. The same path will be used -in inverse order- for voice signals from the user's equipment PTE to the LTE.

Data signals may be exchanged from the analog side of the BBDSLM assigned to the relevant user, via the data port of the SSp1, the "voice + data" port of the SSp1, the users' side of the MDF, the relevant twisted wire pair to the user's premises, the "voice + data" port of the user's SSpl, the data port of the same SSpl and the user's computer system. The same path will be used -in inverse order- for data signals from the user's computer equipment to the BBDSLM assigned to the same user.

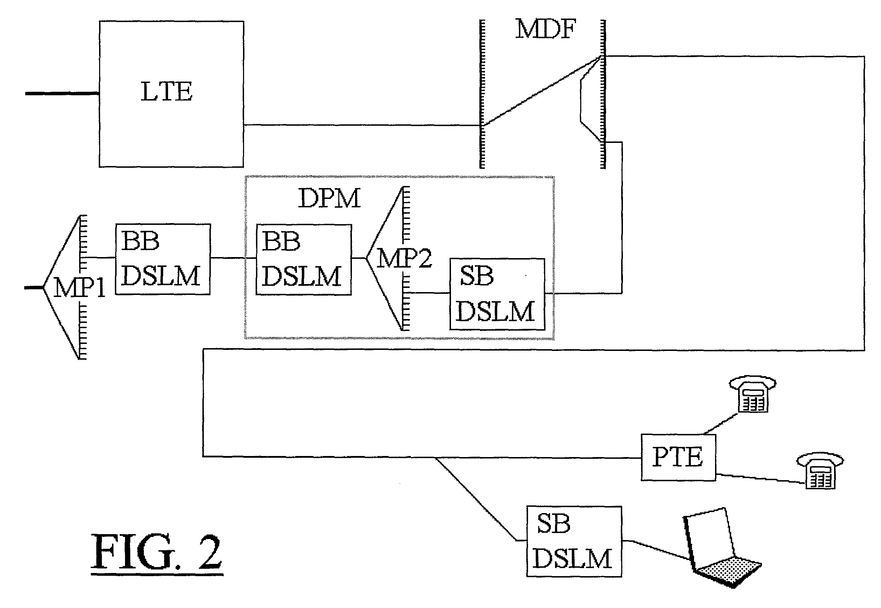

Figure 2 shows an embodiment comprising DSLAM port multiplicators (one shown) within the central office. Different from the prior-art system is that the signal splitters SSp1 have disappeared (both at the side of the central office and at the user's side). Further each DSLAM port, formed by a BBDSLM (only one shown) is connected with a "DSLAM port multiplicator" DPM, expanding the relevant DSLAM port (read BBDSLM) to several (e.g. 20 to 100) smallband ports of e.g. 80 kB/s), each smallband servicing one smallband user. Each DPM may comprise a one (additional) broadband DSL modem for converting the analog (data) signals from the (e.g.) existing (installed base) BBDSLM to digital signals and vice versa, and a (digital) data multiplexer MP2, converting an e.g. 8 Mb/s datastream into a plurality of smallband (e.g. 80 kb/s) datastreams, to be modulated/demodulated in the relevant smallband DSL modems SBDSLM..

The smallband modems SBDSLM, both at the central office side and at the user's side are of a type as disclosed in WO99/29097 or, preferably, as disclosed in EP04076738. Such smallband modems do not need the use of splitters thanks to the measures, within those modems against unwanted intermodulation distortion between data and voice domains.

Due the fact that no signals splitters are needed, the analog data port of the SBDSLM can be simply connected with the line between the local telephone exchange LTE and the user telephone equipment PTE. As in this new configuration the data port simply can be connected with the voice line, without any need for splitters, there also is no need to interrupt the voice line, as in prior art system, where the voice connection is interrupted inside the MDF, to be able to split/combine the voice and data stream.

In figure 2 the analog data ports of the smallband modems SBDSLM are connected with the user wires within the central station, viz. at the user side of the MDF.

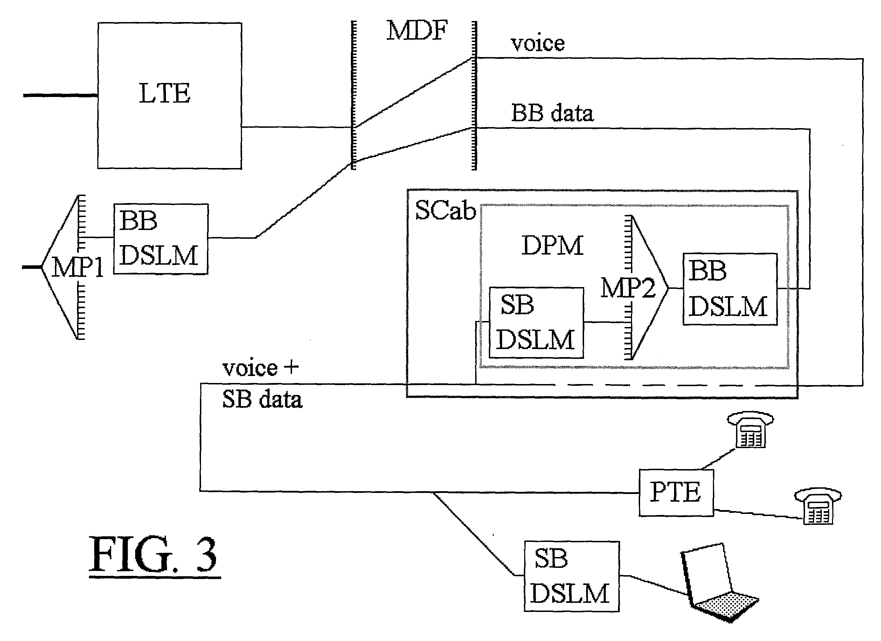

In figure 3 the analog data ports of the smallband modems SBDSLM are not connected with the user wires within the central station but at a location outside the central office, viz. in an (e.g. existing) street cabinet SCab. In this configuration the broadband DSL modem within the "DSLAM port multiplicator" DPM is connected to the relevant (installed base) BBDSLM within the central office by means of a twisted wire pair (BB data), "feeding" the relevant BBDSLM within the street cabinet. The advantage of the configuration of figure 3 is that the maximum total (cable) distance between the central office and the user will be expanded with the (maximum) cable length of the BB data section, e.g. by several kilometres.

## Claims

1. Method for simultaneous exchange of analog voice band signals and digital data signals between user termination equipment and local exchange equipment via common connection wires, the data signals to be exchanged between the user termination equipment and the local exchange equipment in the format of a modulated carrier signal having a frequency spectrum above the voice band, wherein the digital data signals are converted into data signals having a specific bandwidth and/or format and the converted data signals and the voice band signals are merged at said common connection wires, said specific bandwidth and/or format of the converted data signals being thus that no substantial mutual interference between the voice band signals and the converted data signals will occur.

2. Method according claim 1, wherein the digital data signals are converted into data signals having a standard bandwidth and/or format which could cause substantial mutual interference between the voice band signals and the converted data signals after merging at common connection wires, wherein said converted data signals are converted back to a replica of said digital data signals and those replicated digital data signals are converted into data signals having said specific bandwidth and/or format causing no substantial mutual interference between the voice band signals and the converted data signals.

3. Method according claim 2, wherein said specific bandwidth is a fraction of said standard bandwidth.

4. Method according claim 1 or 2, wherein said specific format results from constant envelope modulation of the relevant digital data signals.

5. Method according claim 1 or 2, wherein said specific format results from shift key coding the relevant digital data signals, using a restricted set of shift keys.

6. System for simultaneous exchange of analog voice band signals and digital data signals between user termination equipment and local exchange equipment via common connection wires, comprising means for exchanging the data signals between the user termination equipment and the local exchange equipment in the format of a modulated carrier signal having a frequency spectrum above the voice band, the system comprising converting means (SBDSLM) for converting the digital data signals into data signals having a specific bandwidth and/or format, being fit to cause no substantial mutual interference between the voice band signals and the converted data signals, and means (MDF, Scab) to merge the converted data signals and the voice band signals to said common connection wires.

7. System according claim 6, comprising means (BBDSLM) for converting the digital data signals into data signals having a standard bandwidth and/or format which could cause substantial mutual interference between the voice band signals and the converted data signals after merging to common connection wires, the system comprising means (BBDSLM) for converting back said converted data signals to a replica of said digital data signals and means (SSDSLM) for converting those replicated digital data signals into data signals having said specific bandwidth and/or format causing no substantial mutual interference between the voice band signals and the converted replicated data signals.

8. System according claim 7, wherein said specific bandwidth is a fraction of said standard bandwidth.

9. System according claim 6 or 7, wherein said specific format results from constant envelope modulation of the relevant digital data signals.

10. System according claim 6 or 7, wherein said specific format results from shift key coding the relevant digital data signals, using a restricted set of shift keys.
